# EUROPEAN PATENT SPECIFICATION

(11) **EP 0 600 244 B1**
(45) Date of publication and mention of the grant of the patent: **26.08.1998**
(21) Application number: 93117711.7
(22) Date of filing: 02.11.1993
(51) Int. Cl.: G03B 42/02

(54) **Cassette clamping mechanism**
Kassettenklemmvorrichtung
Mécanisme de fixation de cassette

(30) Priority: 25.11.1992 US 981680
(43) Date of publication of application: 08.06.1994
(73) Proprietor: EASTMAN KODAK COMPANY, Rochester, New York 14650-2201 (US)
(72) Inventor: Flynn, Michael R., c/o EASTMAN KODAK COMPANY, Rochester, New York 14650-2201 (US); Arseneault, Wayne J., c/o EASTMAN KODAK COMPANY, Rochester, New York 14650-2201 (US); Boutet, John Claude, c/o EASTMAN KODAK COMPANY, Rochester, New York 14650-2201 (US); Yaskow, Jeffrey James, c/o EASTMAN KODAK COMPANY, Rochester, New York 14650-2201 (US); Baker, Thomas Dale, c/o EASTMAN KODAK COMPANY, Rochester, New York 14650-2201 (US)
(74) Representative: Blickle, K. Werner, Dipl.-Ing.

(56) References cited:
- EP-A- 0 488 499
- EP-A- 0 522 316
- EP-A- 0 544 138
- FR-A- 1 362 137
- US-A- 4 845 733
- US-A- 5 328 019
- US-A- 5 330 309

## Description

The present invention is directed to a device for clamping a cassette containing a photosensitive material, and more particularly, to a reader designed to clamp a cassette containing a stimulable phosphorus element.

Storage phosphorus film is read by photoelectrically detecting an image formed by scanning with stimulating radiation. An example of such a scanner/reader is disclosed in US-A-4,789,782 to O'Hara. Typically, the cassette is ted to the reader either individually, or by an autoloader such as that described in postpublished US-A- 5,328,019.

The autoloader typically presents cassettes in seriatim to the reader.

In the European Patent Application EP-A-O 552 316 an autoloader for a film cassette is disclosed for feeding cassettes to and receiving them from a computed radiographic reader. The autoloader comprises a plattform for receiving one or more pallets with each such pallet containing a cassette. The pallets are provided with means for registering cassettes of one or more sizes on the surface of each pallet. The registration means includes a rib that serves to establish the position of the cassette in a direction perpendicular to the front and rear edges of the pallet.

A x-ray film cassette transport apparatus is disclosed in EP-A-O 488 499. The apparatus includes an cassette gripping system which allows a x-ray film cassette to be loaded through a window. The cassette is then gripped and withdrawn inwardly to a properly entered exposure position. After the exposure has taken place the cassette is ejected to project partially from the window by a distance which is automatically determined in accordance with the size of the cassette. Guide means moves inwardly to automatically center the cassette, whereby the movement of the guide means is controlled that the guides do not unduly bind the cassette. The cassette is moved by a gripper assembly along the guides into the apparatus.

The reader then takes the cassette and firmly clamps it in position and then removes the photosensitive element therein. Whether cassettes are being automatically fed by an autoloader, or manually by an operator into the reader, it is important that the clamping mechanism within the reader help guide the cassettes into position for extraction of the photosensitive element, that the mechanism not interfere with the extraction of the photosensitive material, and also isolate the cassette from the adjacent autoloader. In addition, the clamping mechanism must be able to receive a variety of different size cassettes and/or pallets containing cassettes and be able to precisely position the cassette within the reader in substantially the same position each time a cassette is presented. It is also important that the clamping mechanism provide feedback to the microprocessor control unit of the reader as to whether the cassette is properly positioned within the clamping mechanism.

Thus, there exists a problem in providing a reader which utilizes a relatively simple mechanism for clamping the cassette and/or cassette and pallet within the reader that is able to constrain the cassette and/or pallet containing a cassette in such a manner so as not to interfere with the extraction of the photographic element therein, allows quick and easy registration of the cassette within the clamping mechanism, is reliable, easy and low cost to manufacture, and assists in isolating the transmission of vibrations through the cassette when in the clamped position.

The foregoing problem is solved by providing an apparatus, as claimed in claim 1, for clamping a cassette containing a photosensitive element.

In the detailed description of the preferred embodiment of the invention presented below, reference is made to the accompanying drawings in which:
Figure 1 is a top plan view of a clamping mechanism made in accordance with the present invention for use in a cassette reader;
Figure 2 is a side elevational view of the mechanism of Figure 1 as taken along line 2-2;
Figure 3 is an cross-sectional view of the clamping mechanism of Figure 2 as taken along line 3-3 in the unclamped condition;
Figure 4 is a cross-sectional view similar to Figure 3 in the clamped position; and
Figure 5 is a schematic view of the pneumatic system used to operate the clamping mechanism of Figure 1.

Referring to the drawings, there is illustrated a clamping mechanism 10 made in accordance with the present invention. The clamping mechanism 10 is designed to be incorporated into a reader for reading of a stored image on a stimulable phosphorus sheet/plate that has been exposed to radiation. In particular, the clamping mechanism 10 is designed for use in a raster scanning reader.

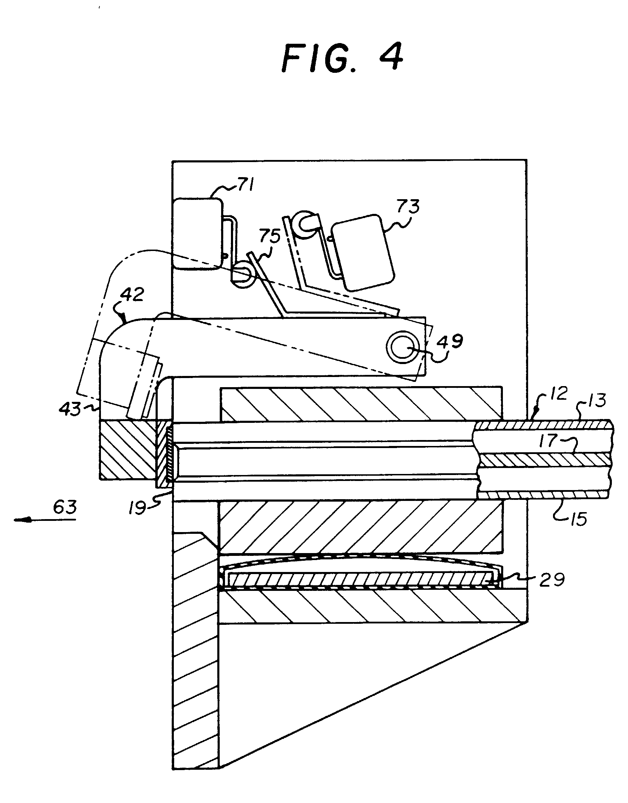

Clamping mechanism 10 is designed to receive cassettes 12 and/or pallets containing cassettes 12 such as that disclosed in EPA-92119102.9, entitled "X-ray Cassette with Removable Photographic Film", by Jeffrey C. Robertson, corresponding to EP-A- 0 544 138. Briefly, cassette 12, Fig. 4, comprises a shell having upper and lower panels 13,15, Fig. 4. A photographic plate or element 17, Fig. 4, of the photostimulable phosphorus type is disposed therein and is secured to a removable end cap 19, Fig. 4. End cap 19 includes a latching mechanism (not shown) for releasing end cap 19 and attached photographic plate 17 from the cassette 12. Thus, photographic plate 17 is designed to be removed with end cap 19 from cassette 12. The details of construction of the cassette is described in the Jeffrey C. Robertson application, EPA-92119102.9, previously referred to above.

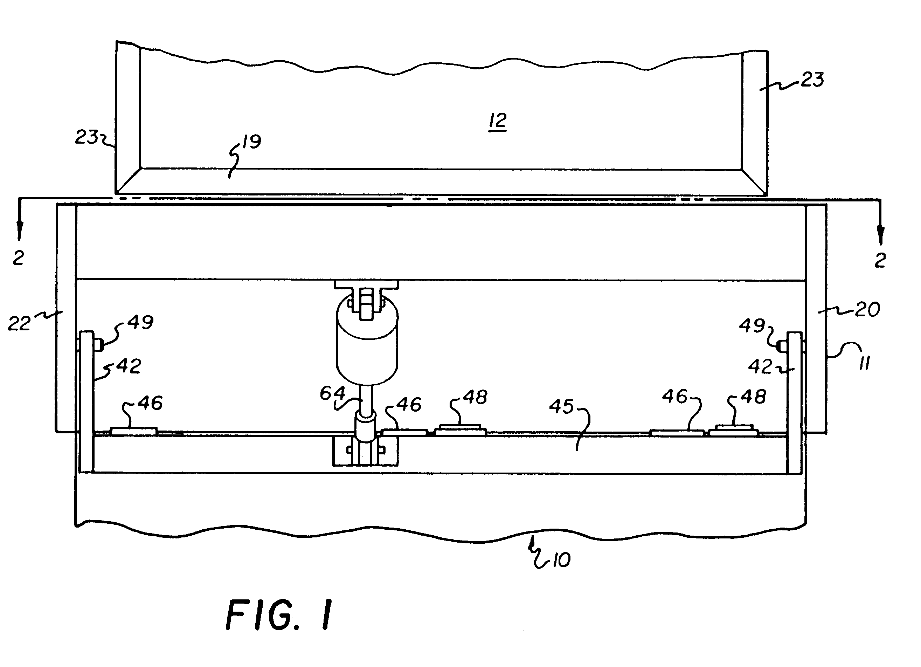

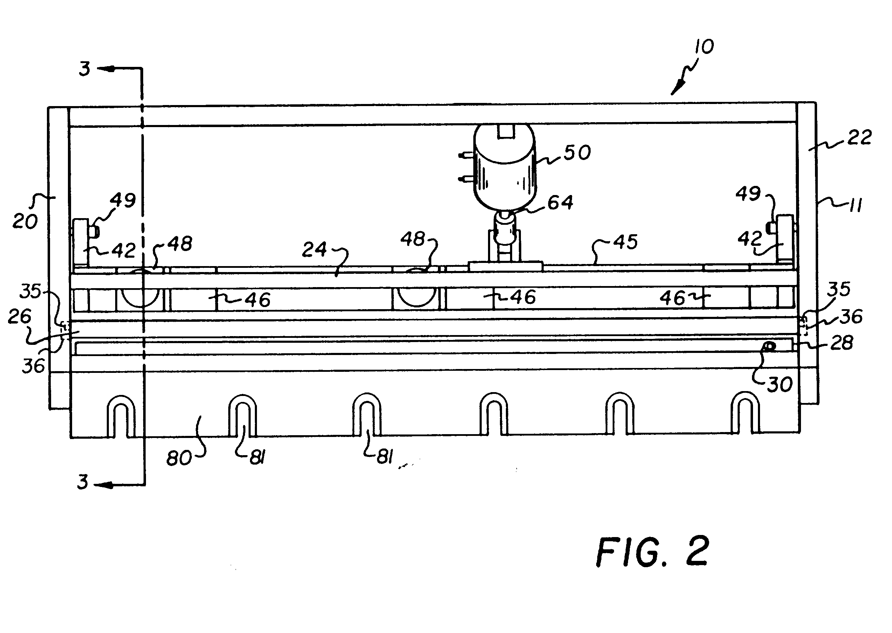

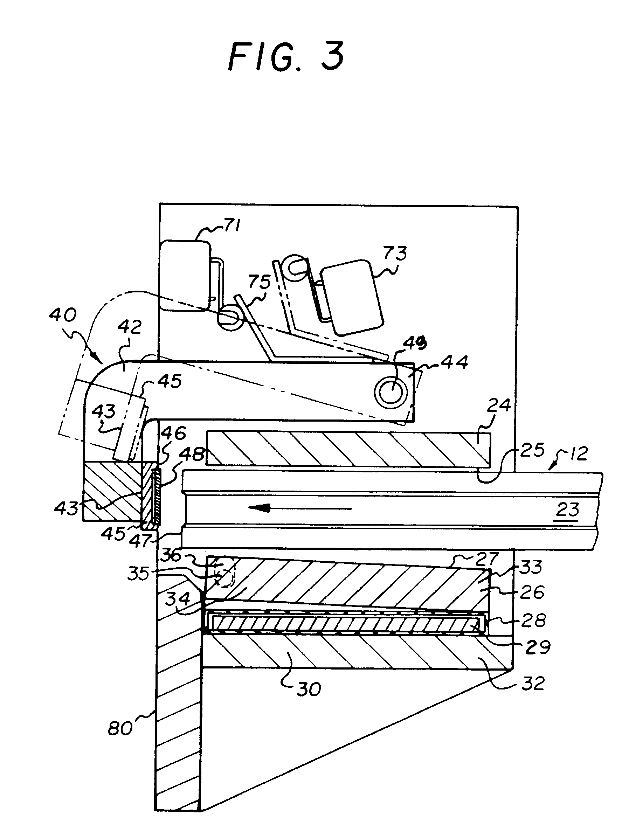

Referring to Fig. 1 and 2, clamping mechanism 10 comprises a frame 11 having a pair of end plates 20,22 having an upper jaw 24 and moveable lower jaw 26 secured thereto. Upper jaw 24 is fixed permanently in position and has a planar registration surface 25, Fig. 3, designed to engage with the top panel or surface 13, Fig. 4, of a cassette 12 and lower jaw 26 has a registration planar surface 27, Fig. 3, designed to engage the opposite or lower surface or panel 15, Fig. 4, of cassette 12. In the preferred embodiment illustrated, registration surfaces 25,27 are planar. In the particular embodiment illustrated, positioning of the surface of cassette 12 actually occurs by side extrusions 23, Fig. 3, of cassette being held by upper and lower jaws 24,26 which ensures the accurate vertical positioning of cassette 12. Additionally, in the particular embodiment illustrated, top panel 13 of cassette 12 is slightly bowed outward from cassette 12 such that when cassette 12 is clamped, top panel 13, Fig. 4, is forced downward by upper jaw 24. When cassette 12 is opened upper jaw 24 restrains top panel 13, Fig. 4, so that it is maintained flat and end cap 19 can be reengaged when photographic element 17 is returned to cassette 12. Without top panel 13 being bowed, it would be difficult to return photographic element 17 to cassette 12 as top panel 13 would stay down during clamping. Mechanism 10 is designed to clamp the forward end 47, Fig. 3 of cassette 12 between registration surfaces 25, 27, Fig. 3, of upper jaw 24 and lower jaw 26. Since side extrusions 23, Fig. 4, extend below the bottom of panel 15, this jaw construction allows the full clamping force to be applied to the bottom of side extrusions 23 of cassette 12. When a cassette 12 is provided on a pallet (not shown), lower jaw 26 contacts the full width of the pallet. In the preferred embodiment illustrated, lower jaw 26 is moved to clamping position by a pneumatic bladder 28 disposed directly beneath lower jaw 26 such that when pneumatic bladder 28, Fig. 3, is inflated, it will cause cassette 12 to be clamped between upper and lower jaws 24,26 (see Figure 4) and when bladder 28 is in the deflated condition (see Figure 3), will allow releasing of cassette 12 from between jaws 24,26. Pneumatic bladder 28, Fig. 3, is made of an appropriate material which is substantially impervious to air such that it will maintain pressure against lower jaw 26. A rectangular metal insert 29 is provided within bladder 28 so as to prevent the internal sides of the bladder from sticking to each other. In the preferred embodiment illustrated, pneumatic bladder 28 is inflated using compressed air and has a substantially elongated configuration having an inlet/outlet port 30, Fig. 2, through which a fluid, such as air, is supplied for inflating of bladder 28 and fluid can be allowed to escape so as to allow deflation of bladder 28. A lower mounting plate 32, Fig. 3, secured to side plates 20,22 is provided below lower jaw 26 so as to provide a resistant force to bladder 28 when inflated which will cause lower jaw 26 to move toward upper jaw 24 and thereby clamp cassette 12 therebetween. In the clamped position, cassette 12 is lifted off the shelves of the adjacent reader (not shown). This results in jaws 24,26 being the only means supporting cassette 12. Therefore, this isolates cassette 12 from an adjacent autoloader (not shown) and prevents the transmission of vibration from the autoloader through cassette 12 to the reader that could affect the scanning of photographic element 17 therein. Lower mounting plate 32, Fig. 3, may be secured to end plates 20,22 in any desired fashion.

Preferably, as illustrated in Figure 3, lower jaw 26 is preferably mounted to end plates 20,22 such that, in the non operative position, forward end 33 of lower jaw 26 will be at a position slightly below rear portion 34 of lower jaw 26. In the particular embodiment illustrated, this is provided by providing a pair of cylindrical pins 35 secured to the back end of lower jaw 26 which rides in a substantially vertically elongated slot 36 formed in side plates 20,22.

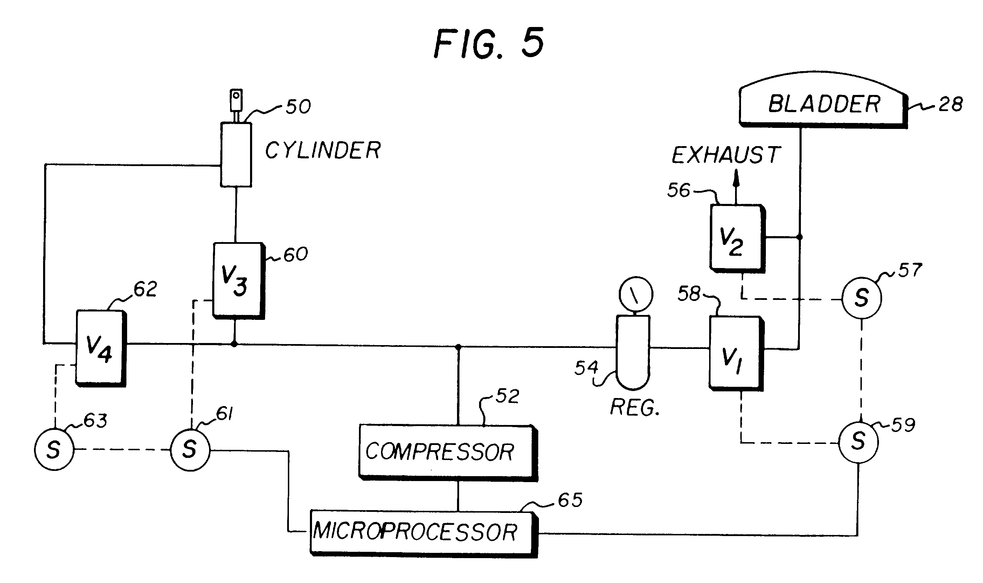

Clamping mechanism 10 further comprises a stop bar assembly 40 which provides a registration surface against which cassette 12 registers. In particular, stop bar assembly 40 includes a pair of arms 42 having a rear portion 44 which is pivotally mounted to end plates 20,22. Arms 42 each have a general L-shaped configuration, with short legs 43 of arms 42 facing downward. The ends of legs 43 are connected to a stop bar 45 which is designed to extend along the length of the front surface 47 of cassette 12. Stop bar 45 includes a plurality registration surface 46 for mating against the front surface 47 of cassette 12. Arms 42 are movable between an engaged position as illustrated in solid lines in Figures 3 and 4 to a non-engaged position illustrated by phantom lines. When arms 42 are in the engaged position, stop bar 45 through registration surfaces 46 provides a positive stop against which cassette 12 can be properly aligned. Registration surface 46 is provided with a plurality of switches 48 which are designed to engage front surface 47 of cassette 12. In the particular embodiment illustrated, two switches 48 are provided on stop bar 45, however, any desired number may be used. When cassette 12 is properly registered against registration surfaces 46, which in the embodiment illustrated are slightly raised above the surface of stop bar 45, switches 48 will be depressed, thus providing a signal to microprocessor control unit 65, Fig. 5, which controls the operation of the reader. Microprocessor 65 is connected to various elements for controlling the operation of the reader as is customarily done in similar prior art devices. If microprocessor control unit 65 does not sense that microswitches 48 have been properly depressed, a message or signal can be provided to the operator that a particular condition has not been met and the reader can be prevented from any further operation until cassette 12 has been properly aligned within the clamping mechanism 10. In order for photographic element 17 to be removed, it is important that cassette 12 be properly aligned within clamping mechanism 10, therefore, switches 48 provide a valuable function in determining whether or not cassette 12 has been properly located to allow extraction of photographic element 17. Switches 48 are positioned so that both large and small cassettes may be properly monitored. An optional side sensing switch (not shown) may be provided in one of end plates 20,22 for detecting if one of side extrusions 23 of cassette 12 has been properly registered therewith.

Once cassette 12 has been properly positioned against registration surfaces 46, clamping takes place. At this point arms 42 are moved to the non engaged position by pneumatic cylinder 50, connected to stop bar 45, which causes arms 42 to rotate about hinge points 49. In this position an extraction mechanism (not shown) provided in the reader may be used to remove photographic element 17 from cassette 12 for further processing within the reader. An example of a suitable extraction mechanism is set forth in detail in US-A- 5,330,309. of Roger S. Brahm and James Lattimore.

Referring to Figure 5, there is illustrated a schematic diagram of the pneumatic system used to control bladder 28 and pneumatic cylinder 50. An appropriate sized air compressor 52 is provided for providing fluid pressure to pneumatic cylinder 50 and bladder 28. In the preferred embodiment illustrated, a pressure regulator 54 is used to regulate the pressure to bladder 28. Preferably, bladder 28 is limited to pressures of approximately 7 psi. However, the fluid pressure may be varied as desired.

In order to assure maintaining of the fluid pressure within bladder 28 during clamping of cassette 12, a pair of valves 56,58 are provided. Valve 58, in the embodiment shown, controls pressurization of bladder 28 while valve 56 controls the exhaust of fluid pressure therein when deflation is desired. Appropriate switches 57 and 59 are provided for controlling valves 56,58, respectively. Switches 57,59 are preferably controlled by microprocessor control unit 65 which determines when bladder 28 should be inflated or deflated. When it is desired to inflate bladder 28, switch 59 is energized so as to open valve 58 to allow fluid pressure to enter bladder 28 and switch 57 is energized so that valve 56 is closed. When the appropriate pressure has been provided to bladder 28, switch 59 is activated to close valve 58, thus maintaining the desired pressure within bladder 28. When it is desired to exhaust the fluid pressure from bladder 28 so as to release cassette 12, switch 59 is activated so that valve 56 allows fluid to escape.

A pair of valves 60,62 are provided for controlling the action of pneumatic cylinder 50. Appropriate switches 61,63 are provided for controlling valves 60,62, respectively. Switches 61,63 are also controlled by microprocessor control unit 65 for properly positioning stop bar assembly 40 as required. In particular, when it is desired to bring stop bar 45 to the position for receiving a cassette 12, valve 60 is activated so as to provide fluid pressure on cylinder 50 for driving drive piston rod 64 to the extended position such that arms 42 rotate about pivot point 49 thus moving registration surface 46 to the engaged position. When it is desired to move stop bar 45 to the non-engaged position, valve 54 is energized which drives piston rod 64 in the opposite direction causing arms 42 to be placed in the retracted position as illustrated by phantom lines in Figures 3 and 4. A pair of switches 71,73 are provided for sensing an action member 75 attached to one of arms 42. In particular, switch 71 is activated to provide a signal to microprocessor or control unit 65 when stop bar 45 is in the operative position for receiving a cassette and switch 73 provides an appropriate signal to microprocessor control unit 65 when stop bar 45 is in the retracted, non-operative position suitable for allowing the extraction of plate 17 from cassette 12 in the direction, as indicated by arrow 63.

While the present invention has illustrated various valves and switches used to control the supply of fluid to bladder 28 and pneumatic cylinder 50, it is to be understood that various other combinations for controlling of these elements may be provided.

Clamping mechanism 10 is further provided with a mounting plate 80 for mounting the mechanism to the reader. In the embodiment illustrated, mounting plate 80 is provided with a plurality of opening/slots 81 for receiving bolts (not shown) for securing the mechanism to the reader. However, mechanism 10 may be secured to the reader in any manner desired.

In order to more fully understand the present invention, a brief description of its operation will now be discussed. First, as illustrated in Figure 3, lower jaw 26 is placed in the open position by the deflation of bladder 28. Clamp bar assembly 40 is placed in the engaging position as illustrated by solid lines in Figures 3 and 4. Thereafter, a cassette 12, either manually, or by an adjacent autoloader (not shown), is inserted within the clamping mechanism. When switches 48 are properly seated by cassette 12 being properly positioned against registration surface 46, bladder 28 is caused to be inflated by microprocessor control unit 65, properly energizing switches 57,59 to allow valves 56,58 to inflate bladder 28. Once bladder 28 has been fully inflated and in position, switches 57,59 are energized so as to maintain bladder 28 in the pressurized state. Thereafter, arms 42 of stop bar assembly 40 are moved to the non-engaged position as illustrated by phantom line in Figures 3 and 4. This is accomplished by appropriately activating switches 61,63 so as to place valves 60,62 in the condition causing fluid pressure to be provided to cylinder 50 such that stop bar 45 is moved to the position illustrated by phantom lines in Figures 3 and 4, thus allowing removal of the photographic element in a direction parallel to the cassette as shown by arrow 63. Photographic element 17 and associated end cap 19 are removed from the end of cassette 12 by an extraction mechanism (not shown) provided in the reader and element 17 is read by the reader as discussed in the patent of Roger S. Brahm and James Lattimore, previously referred to herein. Clamping mechanism 10 is maintained in the clamped position until the photographic element is returned within cassette 12. After the extraction mechanism has been moved out of the way, arms 42 are returned to the engaged position and bladder 28 is deflated. Thereafter, cassette 12 is either removed manually, or by an adjacent automatic loader (not shown). The process is repeated as desired.

In the preferred embodiment illustrated, lower jaw 26 is moved into the clamping position by use of pneumatic means. If desired, other means may be employed. For example, a camming mechanism (not shown) could be used to move lower jaw 26 between the clamping and non clamping positions. In particular, a cam can be rotatably mounted to frame 11 so that it can be rotated, the cam having an outer surface engaging the bottom of moveable jaw 26 so that when the cam is rotated, jaw member 26 will move between the unclamped position shown in Figure 3 to the clamped position shown in Figure 4.

The present invention provides a reliable clamping mechanism for cassettes and/or pallets containing cassettes, allows quick and easy registration of the cassette, is easy and low cost to manufacture and assists in isolating the transmission vibrations through the cassette.

## Claims

1. Apparatus (10) for clamping a cassette (12) containing a photosensitive element (17), comprising:
a frame (11);
a stop bar (45) movably mounted to the frame (11) for movement between an operative position in which the stop bar (45) is engaged in register with the forward end of the cassette (12) and a non operative position, the stop bar (45) having a registration surface (46) for registering the forward end (47) of the cassette (12);
a first jaw member (24) fixed to the frame (11), the first jaw member (24) having a second registration surface (25) for engagement with a first side of the cassette (12);
a second movable jaw member (26) movable between a clamping position and a non clamping position, the second jaw member (26) having a clamping surface (27) for engaging a second side of the cassette (12) opposite the first side of the cassette (12) so as to clamp the cassette (12) between the first and second jaw members (24,26) when the second jaw member (26) is in the clamping position;
means for moving the second movable jaw member (26) between the clamping and non clamping positions,
characterized in that;
said stop bar (45) is removed from the operative position when said second jaw member (26) is in said clamping position,
so that said cassette (12) is supported solely by said jaw members (24,26) for allowing removal of the photosensitive element through the forward end the cassette.

2. Apparatus as claimed in claim 1 wherein said means for moving the second movable jaw member (26) includes a pneumatic bladder (28) located adjacent the second movable jaw member (26) which is capable of being inflated to a configuration which causes the second jaw member (26) to move from the non clamping position to a clamping position such that the cassette (12) is clamped between the first and second jaw members (24,26).

3. Apparatus as claimed in claim 1 wherein the stop bar (45) includes sensing means (48) for determining when the cassette (12) has been properly seated against the registration surface (46).

4. Apparatus (10) as claimed in claim 1 wherein the stop bar (45) is pivotably mounted to the apparatus (10).

5. Apparatus (10) as claimed in claim 1 further comprising means (50) for moving the stop bar (45) between the operative and non operative positions.

6. Apparatus as claimed in claim 5 wherein said means (50) for moving the stop bar (45) comprises pneumatic means.

7. Apparatus (10) as claimed in claim 6 wherein said pneumatic means comprises a pneumatic cylinder (50).

8. Apparatus (10) as claimed in the claims 1 and 2 wherein a mounting plate (32) is provided for resisting movement of the bladder (28) so as to cause the second jaw member (26) to move in a direction toward the first jaw member (24).

9. Apparatus (10) as claimed in claim 2 wherein said means for moving the second movable jaw member (26) comprises;
a source of pneumatic pressure (52);
first valve means (56,58) fluidly connected to the source of pneumatic pressure (52) for controlling pressurization and deflation of the bladder (28);
second valve means (60,62) fluidly connected to the source of penumatic pressure (52) for controlling movement of the stop bar (45) between the operative and non operative positions.

10. Apparatus (10) as claimed in claim 1 further comprising means (61,63) for sensing when the stop bar (45) is in the operative position.

11. Apparatus (10) as claimed in claim 1 wherein the means for moving the second jaw member (26) comprise a cam assembly which moves the second jaw member (26) between the clamping and non-clamping positions.

## Patentansprüche

1. Vorrichtung (10) zum Festklemmen einer ein lichtempfindliches Material (17) enthaltenden Kassette (12), mit
- einem Rahmen (11);
- einer am Rahmen (11) angebrachten Anschlagleiste (45), die zwischen einer Arbeitsstellung, in welcher sich die Anschlagleiste (45) in Eingriff mit der Stirnseite der Kassette (12) befindet und mit dieser ausgerichtet ist, und einer Ruhestellung bewegbar ist, wobei die Anschlagleiste (45) eine Fläche (46) für die Ausrichtung der Stirnseite (47) der Kassette (12) aufweist;
- einer ersten, am Rahmen (11) befestigten Klemmbacke (24), welche eine zweite Ausrichtfläche (25) für die Anlage an einer ersten Seite der Kassette (12) aufweist;
- einer zweiten, bewegbaren Klemmbacke (26), welche zwischen einer Klemmstellung und einer Freigabestellung bewegbar ist und eine Klemmfläche (27) für die Anlage an einer gegenüber der ersten Seite befindlichen zweiten Seite der Kassette (12) aufweist, um die Kassette (12) zwischen die erste und zweite Klemmbacke (24, 26) einzuklemmen, wenn sich die zweite Klemmbacke (26) in ihrer Klemmstellung befindet; und
- einer Einrichtung zum Bewegen der zweiten, bewegbaren Klemmbacke (26) zwischen der Klemmstellung und der Freigabestellung;
dadurch gekennzeichnet, daß
- die Anschlagleiste (45) aus ihrer Arbeitsstellung zurückziehbar ist, wenn sich die zweite Klemmbacke (26) in ihrer Klemmstellung befindet, so daß die Kassette (12) ausschließlich durch die Klemmbacken (24, 26) gehalten ist, und daß das lichtempfindliche Material durch die Stirnseite der Kassette entnehmbar ist.

2. Vorrichtung nach Anspruch 1, dadurch gekennzeichnet, daß die Einrichtung zum Bewegen der zweiten, bewegbaren Klemmbacke (26) eine neben dieser angeordnete, druckluftbetätigte Blase (28) aufweist, die so aufblasbar ist, daß die zweite, bewegbare Klemmbacke (26) aus ihrer Freigabestellung in ihre Klemmstellung bewegbar ist, so daß die Kassette (12) zwischen der ersten und der zweiten Klemmbacke (24, 26) einklemmbar ist.

3. Vorrichtung nach Anspruch 1, dadurch gekennzeichnet, daß die Anschlagleiste (45) einen Sensor (48) aufweist, der feststellt, wann die Kassette (12) ordnungsgemäß an der Ausrichtfläche (46) anliegt.

4. Vorrichtung nach Anspruch 1, dadurch gekennzeichnet, daß die Anschlagleiste (45) an der Vorrichtung (10) schwenkbar angeordnet ist.

5. Vorrichtung nach Anspruch 1, gekennzeichnet durch eine Einrichtung (50) zum Bewegen der Anschlagleiste (45) zwischen der Arbeits- und Ruhestellung.

6. Vorrichtung nach Anspruch 5, dadurch gekennzeichnet, daß die Einrichtung (50) zum Bewegen der Anschlagleiste (45) eine pneumatische Einrichtung ist.

7. Vorrichtung nach Anspruch 6, dadurch gekennzeichnet, daß die pneumatische Einrichtung einen Zylinder (50) aufweist.

8. Vorrichtung nach den Ansprüchen 1 und 2, dadurch gekennzeichnet, daß eine Montageplatte (32) vorgesehen ist, die der Bewegung der Blase (28) widersteht und bewirkt, daß sich die zweite Klemmbacke (26) in Richtung der ersten Klemmbacke (24) bewegt.

9. Vorrichtung nach Anspruch 2, dadurch gekennzeichnet, daß die Einrichtung zum Bewegen der zweiten, bewegbaren Klemmbacke (26) folgende Komponenten aufweist:
- eine Druckluftquelle (52);
- erste Ventile (56, 58), die an die Druckluftquelle (52) angeschlossen sind und das Aufblasen und Entleeren der Blase (28) steuern; und
- zweite Ventile (60, 62), die an die Druckluftquelle (52) angeschlossen sind und die Bewegung der Anschlagleiste (45) zwischen ihrer Arbeits- und Ruhestellung steuern.

10. Vorrichtung nach Anspruch 1, gekennzeichnet durch Mittel (61, 63), die feststellen, wann sich die Anschlagleiste (45) in ihrer Arbeitsstellung befindet.

11. Vorrichtung nach Anspruch 1, dadurch gekennzeichnet, daß die Einrichtung zum Bewegen der zweiten Klemmbacke (26) eine Nockenscheibe aufweist, welche die zweite Klemmbacke (26) zwischen ihrer Klemm- und Freigabestellung bewegt.

## Revendications

1. Dispositif (10) destiné à serrer une cassette (12) contenant un élément photosensible (17), comprenant :
un cadre (11),
un levier de blocage (45) monté de façon mobile sur le cadre (11) afin de se déplacer entre une position fonctionnelle dans laquelle le levier de blocage (45) est en contact d'alignement avec l'extrémité antérieure de la cassette (12) et une position non fonctionnelle, le levier de blocage (45) comportant une surface d'alignement (46) destinée à aligner l'extrémité antérieure (47) de la cassette (12),
un premier élément de mâchoire (24) fixé au cadre (11), le premier élément de mâchoire (24) comportant une seconde surface d'alignement (25) destinée à venir en contact avec une première face de la cassette (12),
un second élément de mâchoire mobile (26) pouvant être déplacé entre une position de serrage et une position de non-serrage, le second élément de mâchoire (26) comportant une surface de serrage (27) destinée à venir en contact avec une seconde face de la cassette (12) opposée à la première face de la cassette (12) de manière à serrer la cassette (12) entre les premier et second éléments de mâchoire (24, 26) lorsque le second élément de mâchoire (26) se trouve dans la position de serrage,
un moyen destiné à déplacer le second élément de mâchoire mobile (26) entre les positions de serrage et de non-serrage,
caractérisé en ce que
ledit levier de blocage (45) est écarté de la position fonctionnelle lorsque ledit second élément de mâchoire (26) se trouve dans ladite position de serrage, de sorte que ladite cassette (12) est supportée uniquement par lesdits éléments de mâchoire (24, 26) afin de permettre l'extraction de l'élément photosensible par l'intermédiaire de l'extrémité antérieure de la cassette.

2. Dispositif selon la revendication 1, dans lequel ledit moyen destiné à déplacer le second élément de mâchoire mobile (26) comprend une vessie pneumatique (28) placée à proximité du second élément de mâchoire mobile (26), qui peut être gonflée suivant une configuration qui amène le second élément de mâchoire (26) à se déplacer depuis la position de non-serrage jusqu'à une position de serrage, de façon que la cassette (12) soit serrée entre les premier et second éléments de mâchoire (24, 26).

3. Dispositif selon la revendication 1, dans lequel le levier de blocage (45) comprend un moyen de détection (48) destiné à déterminer quand la cassette (12) a été calée de façon appropriée contre la surface d'alignement (46).

4. Dispositif (10) selon la revendication 1, dans lequel le levier de blocage (45) est monté de façon pivotante sur le dispositif (10).

5. Dispositif (10) selon la revendication 1, comprenant en outre un moyen (50) destiné à déplacer le levier de blocage (45) entre les positions fonctionnelle et non fonctionnelle.

6. Dispositif selon la revendication 5, dans lequel ledit moyen (50) destiné à déplacer le levier de blocage (45) comprend un moyen pneumatique.

7. Dispositif (10) selon la revendication 6, dans lequel ledit moyen pneumatique comprend un vérin pneumatique (50).

8. Dispositif (10) selon les revendications 1 et 2, dans lequel une plaque de montage (32) est prévue afin de s'opposer au dépiacement de la vessie (28) de manière à amener le second élément de mâchoire (26) à se déplacer en direction du premier élément de mâchoire (24).

9. Dispositif (10) selon la revendication 2, dans lequel ledit moyen destiné à déplacer le second élément de mâchoire mobile (26) comprend :
une source de pression pneumatique (52),
des premières vannes (56, 58) en communication fluidique avec la source de pression pneumatique (52) destinées à commander la mise sous pression et le dégonflage de la vessie (28),
des secondes vannes (60, 62) en communication fluidique avec la source de pression pneumatique (52) destinées à commander le déplacement du levier de blocage (45) entre les positions fonctionnelle et non fonctionnelle.

10. Dispositif (10) selon la revendication 1, comprenant en outre des moyens (61, 63) destinés à détecter quand le levier de blocage (45) se trouve dans la position fonctionnelle.

11. Dispositif (10) selon la revendication 1, dans lequel le moyen destiné à déplacer le second élément de mâchoire (26) comprend un ensemble à came qui déplace le second élément de mâchoire (26) entre les positions de serrage et de non-serrage.
